# EUROPÄISCHE PATENTSCHRIFT

(11) **EP 2 187 185 B1**
(45) Veröffentlichungstag und Bekanntmachung des Hinweises auf die Patenterteilung: **16.03.2016**
(21) Anmeldenummer: 08169291.5
(22) Anmeldetag: 17.11.2008
(51) Int. Cl.: G01F 23/00, G01L 9/00, G01N 9/00, G06F 9/00, G06F 12/00

(54) **Feldgerät mit getrennten Speicherbereichen**
Field device with separate storage areas
Appareil de terrain doté de domaines de stockage séparés

(43) Veröffentlichungstag der Anmeldung: 19.05.2010
(73) Patentinhaber: VEGA Grieshaber KG, 77709 Wolfach (DE)
(72) Erfinder: Haas, Jürgen, 77709 Oberwolfach (DE); Gaiser, Martin, 72275 Alpirsbach (DE); Lienhard, Jürgen, 77716 Fischerbach (DE); Motzer, Jürgen, 77723 Gengenbach (DE)
(74) Vertreter: Schäflein, Christian Georg

(56) Entgegenhaltungen:
- WO-A-00/03209
- WO-A-2004/104525
- GB-A- 2 251 506
- US-A- 6 148 384
- K. PATTABIRAMAN ET AL.: "software critical memory: all memory is not created equal" September 2006 (2006-09), Seiten 1-12, XP002525828 Redmond, WA, USA Gefunden im Internet: URL:http://research.microsoft.com/pubs/703 42/tr-2006-128.doc> [gefunden am 2009-04-15]
- SALTZER J H ET AL: "The protection of information in computer systems" PROCEEDINGS OF THE IEEE USA, Bd. 63, Nr. 9, September 1975 (1975-09), Seiten 1278-1308, XP002525829 ISSN: 0018-9219

## Beschreibung

### Gebiet der Erfindung

Die Erfindung betrifft die Füllstands-, Druck- und Dichtemessung. Insbesondere betrifft die Erfindung ein Feldgerät zum Messen eines Füllstands, eines Drucks oder einer Dichte eines Mediums, ein Verfahren zur Messung und Bestimmung eines Füllstands, eines Drucks oder einer Dichte eines Mediums, ein Programmelement sowie ein computerlesbares Medium.

### Technologischer Hintergrund

Entwicklungen für den Bereich "funktionale Sicherheit" im Bereich der Füllstands-, Druck- oder Dichtemessung erfordern einen hohen Aufwand an Zeit und Qualifikation des Eritwicklungsteams.

Die Geräte, die eine Sicherheitsfunktion ausführen, haben in der Regel weitere Funktionen, die keinen Beitrag zur Ausführung der Sicherheitsfunktionen liefern. Nicht sicherheitsgerichtete Funktionen müssen in ihrer Rückwirkung auf die Sicherheitsfunktion betrachtet werden.

Dies kann zur Folge haben, dass auch diese Funktionalitäten als kritisch eingestuft werden müssen und somit ein erhöhter Entwicklungsaufwand entsteht.

Die US 6,148,384 offenbart einen Host-Adapter mit einem Speicher-Interface, das Schutzschaltungen umfasst, die ein Überschreiben oder Löschen eines Abschnitts des Speichers schützen, der durch ein Flag als geschützt markiert ist. Das Flag befindet sich in einem Register, das keine Änderungen zulässt, außer wenn sich der Host-Adapter in einem Zustand, wie etwa einem Abbruch-Zustand, befindet.

Die WO 2004/104525 A betrifft eine Alarmsteuerung für ein niedriges Niveau oder ein hohes Niveau in einem Tank. Die Steuerung kann mit Niveauerfassungsgeräten in einer Weise verbunden werden, dass die Steuerung von stromabwärtsgelegenen Komponenten isoliert ist. Dies geschieht über eine Relay und einen mechanischen Schalter, der von einem Benutzer betätigt werden kann.

### Zusammenfassung der Erfindung

Es ist eine Aufgabe der Erfindung, ein Feldgerät bereitzustellen, das erhöhten Sicherheitsanforderungen genügt.

Es sind ein Feldgerät zum Messen eines Füllstands, eines Drucks oder einer Dichte eines Mediums in einem Behälter, ein Verfahren zur Messung und Bestimmung eines Füllstands, eines Drucks oder einer Dichte eines Mediums in einem Behälter, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Feldgerät, das Verfahren, das Programmelement und das computerlesbare Medium. In anderen Worten lassen sich die im Folgenden im Hinblick auf das Feldgerät genannten Merkmale auch in dem Verfahren, dem Programmelement oder dem computerlesbaren Medium implementieren, und umgekehrt.

Gemäß einem Ausführungsbeispiel der Erfindung ist ein Feldgerät zum Messen eines Füllstands, eines Drucks oder einer Dichte eines Mediums in einem Behälter angegeben, welches einen Datenspeicher aufweist. Der Datenspeicher ist in zumindest einen ersten und einen zweiten Speicherbereich aufgeteilt, die voneinander getrennt sind. Der erste Speicherbereich speichert diejenigen Daten von Programmmodulen, die zum sicheren Betrieb des Feldgeräts benötigt werden und somit als sicherheitskritisch eingestuft sind. Der zweite Speicherbereich speichert nur diejenigen Daten von Programmmodulen, die nicht zum sicheren Betrieb des Feldgeräts benötigt werden und somit als nicht sicherheitskritisch eingestuft sind.

Auf diese Weise kann eine Trennung von sicherheitskritischen Funktionen des Feldgeräts und nicht sicherheitskritischen Funktionen des Feldgeräts (wie beispielsweise Diagnose, Datenlogger, Statistik, Messwertanzeige) erreicht werden.

Aufgrund der Trennung der Funktionen können die nicht sicherheitskritischen bzw. nicht sicherheitsgerichteten Funktionen mit geringerem Aufwand entwickelt werden. Somit ist es auch möglich, Softwareteile einzusetzen, die schon vorhanden sind oder eingekauft werden und keine erhöhten Anforderungen hinsichtlich der Sicherheitsintegrität erfüllen.

Ob ein Programmmodul als sicherheitskritisch oder als nicht sicherheitskritisch einzustufen ist, bemisst sich an der Sicherheitsanforderungsstufe, die dieses Programmmodul erfüllen muss. Die Sicherheitsanforderungsstufe ist ein Begriff aus dem Gebiet der funktionalen Sicherheit und wird auch als Sicherheitsintegritätslevel (SIL) bezeichnet. Aus der angestrebten Sicherheitsanforderungsstufe ergibt sich das sicherheitsgerichtete Konstruktionsprinzip, das einzuhalten ist, damit das Risiko einer Fehlfunktion den gestellten Anforderungen genügt.

Ist ein Programmmodul als sicherheitskritisch eingestuft, bedeutet dies beispielsweise, dass dieses Programmmodul beispielsweise den Anforderungen von SIL 3 oder sogar SIL 4 zu genügen hat. Ist ein Programmmodul als nicht sicherheitskritisch eingestuft, bedeutet dies beispielsweise, dass es den Anforderungen von SIL 0 zu genügen hat.

Gemäß einem weiteren Ausführungsbeispiel der Erfindung ist eine Speicherverwaltungseinheit vorgesehen, die den Zugriff auf die verschiedenen Daten steuert und ggf. auch kontrolliert.

Bei der Speicherverwaltungseinheit handelt es sich beispielsweise um eine sog. Memory Management Unit (MMU). Die Speicherverwaltungseinheit dient beispielsweise der Abschottung von Prozessen (also den verschiedenen Programmmodulen) voneinander und vom Betriebssystem. Die Speicherverwaltungseinheit kann eine externe Zusatzkomponente zu einem Mikroprozessor sein. Auch kann sie in den Mikroprozessor integriert sein. Die Speicherverwaltungseinheit regelt insbesondere auch Speicherschutzaufgaben. So können einzelne Speicherbereiche für die Ausführung durch bestimmte Programmmodule oder zum weiteren Beschreiben gesperrt werden.

Gemäß einem weiteren Ausführungsbeispiel der Erfindung ist die Trennung der beiden Speicherbereiche derart ausgeführt, dass keine im ersten Speicherbereich gespeicherten Daten unbeabsichtigt verändert werden können, da die Programmmodule, die als nicht sicherheitskritisch eingestuft sind, nicht darauf zugreifen können.

Gemäß einem weiteren Ausführungsbeispiel der Erfindung ist weiterhin ein Echtzeit-Betriebssystem vorgesehen, das den Sicherheitsanforderungen des Feldgeräts entspricht und welches die Speicherverwaltungseinheit unterstützt.

Gemäß einem weiteren Ausführungsbeispiel der Erfindung ist das Betriebssystem ausgeführt, eine Kommunikation zwischen den einzelnen Programmmodulen herzustellen bzw. zu ermöglichen.

Insbesondere ist das Betriebssystem in der Lage, einen Datenaustausch zwischen den beiden getrennten Speicherbereichen zu managen und zu überwachen.

Gemäß einem weiteren Ausführungsbeispiel der Erfindung enthält der erste Speicherbereich einen Datenspeicher eines Programmmoduls, das zur Ausführung einer Funktion vorgesehen ist, die eine Messwertbestimmung auf Basis von Sensormessdaten, eine Ableitung von weiteren Messwerten auf Basis bereits bestimmter Messwerte, eine Ausgabe von Messwerten und/oder eine Diagnose betrifft.

Hierbei handelt es sich im Kontext der Erfindung um sicherheitsrelevante Funktionen.

Gemäß einem weiteren Ausführungsbeispiel der Erfindung enthält der zweite Speicherbereich einen Datenspeicher eines Programmmoduls, das zur Ausführung einer Verbindungsherstellung zu einer externen Kommunikationseinheit, zur Aufzeichnung von Messwerten mit Statusinformationen über die Zeit, zur Messwertanzeige und/oder zur Werteeinstellung im Feldgerät ausgeführt ist.

Hierbei handelt es sich im Kontext der Erfindung um nicht sicherheitsrelevante Funktionen.

Gemäß einem weiteren Ausführungsbeispiel der Erfindung ist das Feldgerät zur zyklischen Abarbeitung der Messwertbestimmung, der Messwertableitung und der Messwertausgabe ausgeführt.

Gemäß einem Ausführungsbeispiel der Erfindung ist das Feldgerät zur Durchführung der Diagnose parallel zur Messwerterfassung ausgeführt und weist einen Messwertschreiber auf, der nach jeder Messwertbestimmung prüft, ob der entsprechende bestimmte Messwert aufzuzeichnen ist. Dieser Messwert kann dann, redundant, sowohl im ersten Speicherbereich als auch im zweiten Speicherbereich gespeichert werden.

Gemäß einem weiteren Ausführungsbeispiel der Erfindung ist das Feldgerät ein Füllstandmessgerät, das Radarsignale, geführte Mikrowellensignale, Ultraschallsignale oder kapazitive Signale verwendet. Auch kann das Feldgerät als Grenzstandmessgerät ausgeführt sein.

Gemäß einem weiteren Ausführungsbeispiel der Erfindung ist ein Verfahren zur Messung und Bestimmung eines Füllstands, eines Drucks oder einer Dichte eines Mediums in einem Behälter durch ein Feldgerät angegeben, bei dem Programmmodulen ausgeführt werden, die zum sicheren Betrieb des Feldgeräts benötigt werden und somit als sicherheitskritisch eingestuft sind, wobei die Daten der Programmmodule in einem ersten Speicherbereich eines Datenspeichers gespeichert sind. Weiterhin werden Programmmodule ausgeführt, die nicht zum sicheren Betrieb des Feldgeräts benötigt werden und somit als nicht sicherheitskritisch eingestuft sind, wobei die Daten der Programmmodule in einem zweiten Speicherbereich des Datenspeichers gespeichert sind. Die beiden Speicherbereiche sind voneinander getrennt.

Gemäß einem weiteren Ausführungsbeispiel der Erfindung weist das Verfahren den zusätzlichen Schritt auf, dass eine Kommunikation zwischen den beiden Speicherbereichen durch ein Betriebssystem bereitgestellt wird, das den Sicherheitsanforderungen des Feldgeräts entspricht.

Gemäß einem weiteren Ausführungsbeispiel der Erfindung ist ein Programmelement zur Messung und Bestimmung eines Füllstands, eines Drucks oder einer Dichte eines Mediums in einem Behälter durch ein Feldgerät angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Programmelement zur Messung und Bestimmung eines Füllstands, eines Drucks oder einer Dichte eines Mediums in einem Behälter durch ein Feldgerät gespeichert ist, das, wenn es auf einem Prozessor ausgeführt wird, den Prozessor anleitet, die oben angegebenen Verfahrensschritte durchzuführen.

Dabei kann das Programmelement z. B. Teil einer Software sein, die auf einem Prozessor des Feldgeräts gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt eine Darstellung einer Elektronik für ein Feldgerät gemäß einem Ausführungsbeispiel der Erfindung.
Fig. 2 zeigt eine Darstellung einer Elektronik für ein Feldgerät gemäß einem weiteren Ausführungsbeispiel der Erfindung.
Fig. 3 zeigt ein Füllstandsmessgerät gemäß einem Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibüng werden für die gleichen oder ähnlichen Elemente die gleichen Bezugsziffern verwendet.

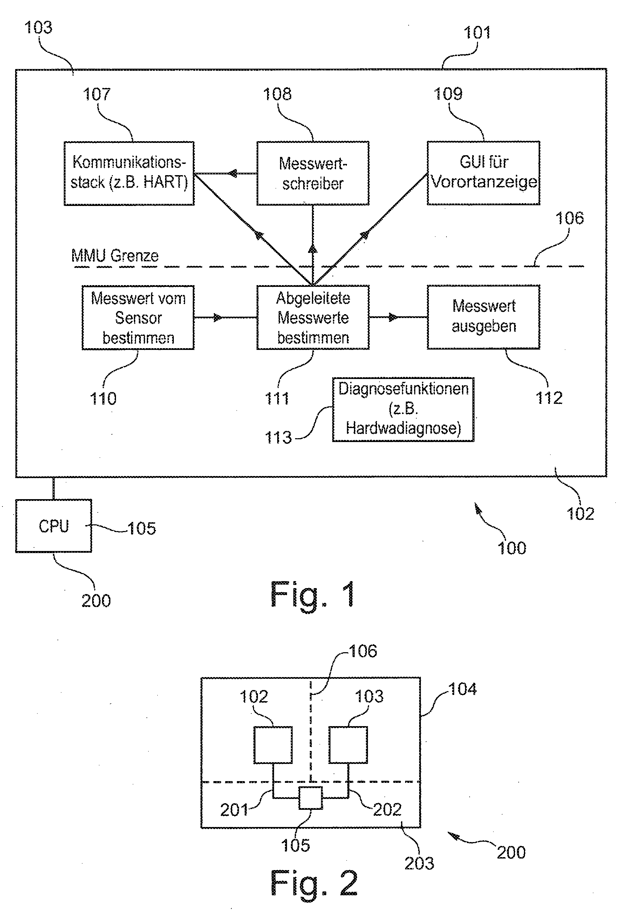

Fig. 1 zeigt ein Elektronikmodul 100 für ein Feldgerät, welches einen Datenspeicher 101 sowie einen Prozessor, beispielsweise in Form einer CPU 105, aufweist.

Der Datenspeicher 101 ist in zwei voneinander getrennte Bereiche 102, 103 aufgeteilt. Die gestrichelte Linie 106 symbolisiert die sog. MMU-Grenze zwischen diesen beiden Bereichen 102, 103.

Die Daten der (sicherheitskritischen) Softwaremodule mit den sicherheitskritischen Funktionen werden in dem ersten Speicherbereich 102 gespeichert und ausgeführt. Der erste Speicherbereich ist durch den Speicherschutz (MMU) von denjenigen Daten der (nicht sicherheitskritischen) Softwaremodulen getrennt, die keinen Beitrag zur Ausführung der Sicherheitsfunktion haben und somit im zweiten Speicherbereich 103 gespeichert sind und ausgeführt werden.

Bei der Ausführung der Sicherheitsfunktion kann somit kein Wert im Speicher, der von einer Sicherheitsfunktion des Feldgeräts verwendet wird, unbeabsichtigt verändert werden. In Bezug auf die Daten ist somit eine Unabhängigkeit gegeben.

Eine Unabhängigkeit in der Ausführungszeit, zwischen der Sicherheitsfunktion und weiteren Funktionen im Feldgerät, kann z. B. durch eine zeitliche und logische Programmablaufkontrolle erreicht werden.

Bei den Daten der sicherheitsrelevanten Funktionen bzw. Programmmodulen, die im ersten Speicherbereich 102 gespeichert sind, handelt es sich beispielsweise um die bestimmten Messwerte vom Sensor, die bestimmten abgeleiteten Messwerte, die auszugebenden Messwerte und Daten bezüglich Diagnosefunktionen.

Für die Messwertbestimmung wird die physikalische Messgröße mit Hilfe eines Sensorelements (z. B. Druckmesszelle) ermittelt. Bei einem Auswertegerät wird dann der Messwert vom Sensor als Stromwert oder digital über ein Protokoll eingelesen.

Für die Bestimmung abgeleiteter Messwerte werden anhand des bestimmten Messwerts weitere Messwerte ermittelt. Hierbei handelt es sich z. B. um die Füllhöhe des Mediums in dem Behälter, entsprechende höhenprozentuale Werte, entsprechende volumenproportionale Werte oder Stromwerte für die Ausgabe.

Die Messwertausgabe kann über einen entsprechend eingestellten Ausgangsstrom für eine 4...20 mA-Schnittstelle erfolgen oder auch in Form eines digitalen Ausgabewerts über ein Protokoll, das die Anforderungen der Sicherheitsfunktion erfüllt.

Die Diagnosefunktionen überwachen die Ausführung der Messfunktion und können die verwendete Hardware auf Fehlfunktionen testen.

Die Messwertbestimmung wird in einem Programmmodul durchgeführt, das auf die Daten im Speicherbereich 110 zugreifen kann. Die bestimmten Messwerte werden daraufhin von einem weiteren Programmmodul verwendet, das daraus abgeleitete Messwerte bestimmt, die im Speicherbereich 111 gespeichert werden. Die auszugebenden Messwerte sind im Speicherbereich 112 gespeichert. Alle diese Speicherbereiche sind im ersten Speicherbereich 102 angeordnet.

Das Bezugszeichen 113 symbolisiert einen Speicherbereich im ersten Speicherbereich 102 für Programmmodule für die Diagnosefunktionen (z. B. Hardwarediagnose).

In dem getrennten, zweiten Speicherbereich 103 sind die Datenspeicherbereiche 107, 108, 109 angeordnet. Hierbei handelt es sich um Daten für nicht sicherheitsrelevante Funktionen, beispielsweise um den sog. Kommunikationsstack 107. Dieser stellt die Verbindung zu externen Kommunikationseinheiten her. Hier können z. B. Messwerte oder Diagnosewerte übertragen werden oder Einstellungen im Gerät verändert werden.

Auch können Daten 108 für einen Messwertschreiber vorgesehen sein. Dieser zeichnet die Messwerte mit Statusinformation über die Zeit auf. Diese Information kann z. B. für die Diagnose der Messaufgabe verwendet werden.

Die Daten 108 des Messwertschreibers können dem Kommunikationsstack 107 zugeführt werden.

Weiterhin können Daten 109 für ein Programmmodul zur Bereitstellung einer grafischen Benutzeroberfläche (GUI) für eine Vorortanzeige für einen Benutzer vorgesehen sein. Dieses Programmmodul kann zur Messwertanzeige und zur Einstellung von Werten im Feldgerät verwendet werden.

Die drei Speicherbereiche 107, 108 und 109 erhalten Daten (beispielsweise in Form von Messwerten und/oder abgeleiteten Messwerten) aus dem ersten Speicherbereich 102. Für die Kommunikation zwischen den beiden Speicherbereichen bzw. zwischen den in den beiden Speicherbereichen gespeicherten Programmmodulen ist ausschließlich ein speziell dafür vorgesehenes Betriebssystem zuständig. Ansonsten sind die beiden Speicherbereiche vollständig voneinander getrennt.

Das Echtzeit-Betriebssystem 105 wird beispielsweise auf dem Prozessor 200 ausgeführt, der an den Datenspeicher 101 angeschlossen ist oder auf dem der Datenspeicher 101 angeordnet ist.

Während der Messung arbeitet das Feldgerät die Programmmodule "Messwert bestimmen", "abgeleitete Messwerte bestimmen" und "Messwert ausgeben" zyklisch ab. Parallel zu dieser Messfunktion wird die Diagnose ausgeführt. Der Messwertschreiber prüft nach jedem Messdurchlauf, ob der Wert aufgezeichnet werden soll. Anfragen über den Kommunikationsstack kommen asynchron zur Messaufgabe und müssen innerhalb einer bestimmten Zeit beantwortet werden.

Grundsätzlich gilt, dass die Messwertkette mehrfach in einem Gerät vorhanden sein kann. Insbesondere können die Messwerte sowohl im ersten Speicherbereich als auch im zweiten Speicherbereich gespeichert werden.

Fig. 2 zeigt einen Prozessor 200 oder einen Speicher für ein Feldgerät, der über einen Speicherbereich 104 verfügt. Dieser Speicherbereich wird mittels einer MMU in mindestens zwei Bereiche 102, 103 aufgeteilt, die gegenseitig vor Zugriffen geschützt sind.

Das Bezugszeichen 106 symbolisiert die Trennung zwischen den beiden Speicherbereichen 102, 103.

Auch kann ein dritter Speicherbereich 203 vorgesehen sein, der nur vom Echtzeit-Betriebssystem 105 verwendet werden kann. Das Echtzeit-Betriebssystem 105 entspricht dem SIL des Feldgeräts und unterstützt die Verwendung der MMU. Dieses Betriebssystem stellt Kommunikationsmöglichkeiten zwischen den verschiedenen getrennten Speicherbereichen 102, 103 her. In anderen Worten ermöglicht das Betriebssystem 105 einen Austausch zwischen den Daten der beiden Speicherbereiche 102, 103 über die Kommunikationspfade 201, 202.

Die Softwaremodule der Sicherheitsfunktion werden so verwendet, dass sie nur auf die Daten in dem geschützten Speicherbereich 102 zugreifen können. Die Softwaremodule der weiteren Funktionen werden so verwendet, dass sie nur auf die anderen Daten im Speicherbereich 103 zugreifen können.

Ein Beispiel für ein Programmmodul, das als sicherheitskritisch eingestuft ist und somit auf dem ersten Speicherbereich 102 zugreift, ist beispielsweise der Schutz vor einer Überfüllung während der Bestimmung eines Füllstands. Nicht sicherheitskritische Funktionen sind z. B. Datenlogger, Statistik oder Messwertanzeige.

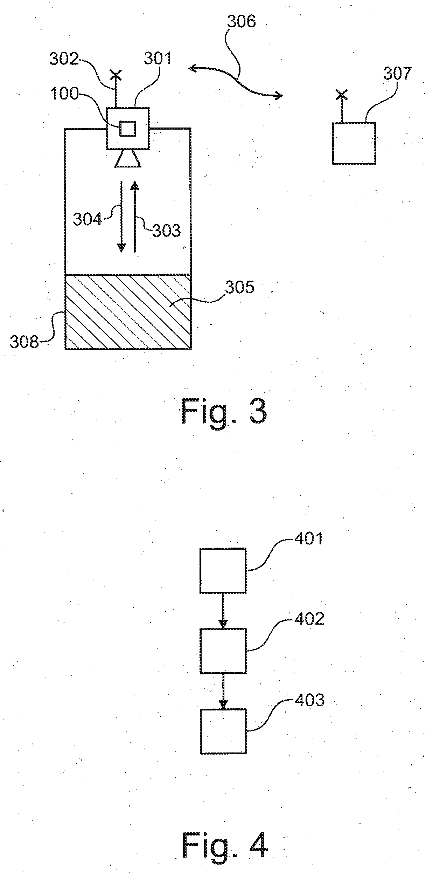

Fig. 3 zeigt ein Füllstandsmessgerät 301, das in einem Tank 308 eingebaut ist und ein Elektronikmodul 100 aufweist. Das Füllstandsmessgerät 301 sendet ein Messsignal 304 in Richtung der Oberfläche des Füllguts 305 aus. Dieses Messsignal wird auf der Oberfläche des Füllguts reflektiert und das entsprechende Empfangssignal 303 wird anschließend vom Füllstandsmessgerät 301 aufgenommen und ausgewertet. Über die Antenne 302 und die Kommunikationsverbindung 306 ist ein Datenaustausch mit einer externen Auswerteeinheit 307 möglich.

Fig. 4 zeigt ein Flussdiagramm eines Verfahrens gemäß einem Ausführungsbeispiel der Erfindung. In Schritt 401 erfolgt die Ausführung von sicherheitskritischen Programmmodulen, die auf Daten in einem ersten Speicherbereich eines Datenspeichers zugreifen. In Schritt 402 erfolgt die Übergabe von bestimmten Daten vom ersten Speicherbereich in einen zweiten Speicherbereich, der als weniger sicherheitskritisch eingestuft ist. Diese Datenübergabe wird exklusiv von dem Echtzeit-Betriebssystem des Feldgeräts gesteuert. In Schritt 403 erfolgt die Ausführung von Programmmodulen, die als nicht sicherheitskritisch eingestuft sind und auf Daten im zweiten Speicherbereich zugreifen.

Es ist zu beachten, dass im Sinne der Erfindung auch sicherheitskritische Programmmodule (also bestimmte Programmbausteine) in einem oben beschriebenen ersten Speicherbereich gespeichert werden können. Genauso können nicht-sicherheitskritische Programmmodule (Programmbausteine) in einem oben beschriebenen zweiten Speicherbereich gespeichert werden.

## Patentansprüche

1. Feldgerät zum Messen eines Füllstands, eines Drucks oder einer Dichte eines Mediums in einem Behälter, das Feldgerät (301) aufweisend:
einen Prozessor (105),
einen Datenspeicher (101) zum Speichern von Daten von Programmmodulen, wobei der Datenspeicher in zumindest einen ersten und einen zweiten Speicherbereich (102, 103) aufgeteilt ist, die voneinander getrennt sind;
wobei der erste Speicherbereich (102) diejenigen Daten der Programmmodule speichert, die zum sicheren Betrieb des Feldgerätes (301) benötigt werden und somit als sicherheitskritisch eingestuft sind;
wobei der zweite Speicherbereich (103) nur diejenigen Daten der Programmmodule speichert, die nicht zum sicheren Betrieb des Feldgerätes (301) benötigt werden und somit als nicht sicherheitskritisch eingestuft sind,
wobei die Trennung der beiden Speicherbereiche (102, 103) derart ausgeführt ist, dass keine im ersten Speicher (102) gespeicherten Daten unbeabsichtigt verändert werden können, da die Programmmodule, die als nicht sicherheitskritisch eingestuft sind, nicht darauf zugreifen können,
wobei das Feldgerät dazu ausgeführt ist, einen Messwert redundant sowohl im ersten Speicherbereich (102) als auch im zweiten Speicherbereich (103) zu speichern.

2. Feldgerät nach Anspruch 1,
wobei die Trennung der beiden Speicherbereiche (102, 103) derart ausgeführt ist, dass eine Speicherverwaltungseinheit Zugriffe auf die Daten verwaltet.

3. Feldgerät nach einem der vorhergehenden Ansprüche,
wobei ein Echtzeit-Betriebssystem (105) vorgesehen ist, das den Sicherheitsanforderungen des Feldgeräts entspricht und die Speicherverwaltungseinheit unterstützt.

4. Feldgerät nach Anspruch 3,
wobei das Betriebssystem eine Kommunikation zwischen den Programmmodulen ermöglicht.

5. Feldgerät nach einem der vorhergehenden Ansprüche,
wobei der erste Speicherbereich (102) einen Datenspeicher eines Programmmoduls enthält, das zur Ausführung einer Funktion vorgesehen ist, die ausgewählt ist aus der Gruppe bestehend aus Messwertbestimmung auf Basis von Sensormessdaten, Ableitung von weiteren Messwerten auf Basis bereits bestimmter Messwerte, Ausgabe von Messwerten, und Diagnose.

6. Feldgerät nach einem der vorhergehenden Ansprüche,
wobei der zweite Speicherbereich (103) einen Datenspeicher eines Programmmoduls enthält, das zur Ausführung einer Funktion vorgesehen ist, die ausgewählt ist aus der Gruppe bestehend aus Verbindungsherstellung zu einer externen Kommunikationseinheit (207), Aufzeichnung von Messwerten mit Statusinformation über die Zeit, Messwertanzeige, und Werteeinstellung im Feldgerät.

7. Feldgerät nach Anspruch 5 oder 6,
wobei das Feldgerät zur zyklischen Abarbeitung der Messwertbestimmung, der Messwertableitung und der Messwertausgabe ausgeführt ist.

8. Feldgerät nach Anspruch 7,
wobei das Feldgerät zur Durchführung der Diagnose parallel zur Messwerterfassung ausgeführt ist und einen Messwertschreiber aufweist, der nach jeder Messwertbestimmung prüft, ob der entsprechende bestimmte Messwert aufzuzeichnen ist;
wobei der Messwert sowohl im ersten Speicherbereich (102) als auch im zweiten Speicherbereich (103) gespeichert wird.

9. Feldgerät nach einem der vorhergehenden Ansprüche,
ausgeführt als Füllstandsradar, Ultraschallfüllstandsmessgerät oder Grenzstandsmessgerät.

10. Feldgerät nach einem der vorhergehenden Ansprüche,
wobei der erste Speicherbereich (102) diejenigen Daten und Programmmodule speichert, die zum sicheren Betrieb des Feldgerätes (301) benötigt werden und somit als sicherheitskritisch eingestuft sind;
wobei der zweite Speicherbereich (103) nur diejenigen Daten und Programmmodule speichert, die nicht zum sicheren Betrieb des Feldgerätes (301) benötigt werden und somit als nicht sicherheitskritisch eingestuft sind.

11. Verfahren zur Messung und Bestimmung eines Füllstands, eines Drucks oder einer Dichte eines Mediums in einem Behälter durch ein Feldgerät, das Verfahren aufweisend die Schritte:
Ausführen von Programmmodulen auf einem Prozessor (105), die zum sicheren Betrieb des Feldgerätes benötigt werden und somit als sicherheitskritisch eingestuft sind, wobei die Daten der Programmmodule in einem ersten Speicherbereich (102) eines Datenspeichers (101) gespeichert sind;
Ausführen von Programmmodulen, die nicht zum sicheren Betrieb des Feldgerätes benötigt werden und somit als nicht sicherheitskritisch eingestuft sind, wobei die Daten der Programmmodule in einem zweiten Speicherbereich (103) des Datenspeichers (101) gespeichert sind;
Redundantes Speichern eines Messwerts sowohl im ersten Speicherbereich (102) als auch im zweiten Speicherbereich (103);
wobei der erste Speicherbereich (102) von dem zweiten Speicherbereich (103) getrennt ist,
wobei die Trennung der beiden Speicherbereiche (102, 103) derart ausgeführt ist, dass keine im ersten Speicher (102) gespeicherten Daten unbeabsichtigt verändert werden können, da die Programmmodule, die als nicht sicherheitskritisch eingestuft sind, nicht darauf zugreifen können.

12. Verfahren nach Anspruch 11, weiterhin aufweisend den Schritt:
Bereitstellen einer Kommunikation zwischen den beiden Speicherbereichen (102, 103) durch ein Betriebssystem, das den Sicherheitsanforderungen des Feldgerätes entspricht.

13. Programmelement zur Messung und Bestimmung eines Füllstands, eines Drucks oder einer Dichte eines Mediums in einem Behälter durch ein Feldgerät, das, wenn es auf einem Prozessor ausgeführt wird, den Prozessor anleitet, die Schritte des Verfahrens nach Anspruch 11 durchzuführen.

14. Computerlesbares Medium, auf dem ein Programmelement zur Messung und Bestimmung eines Füllstands, eines Drucks oder einer Dichte eines Mediums in einem Behälter durch ein Feldgerät gespeichert ist, das, wenn es auf einem Prozessor ausgeführt wird, den Prozessor anleitet, die Schritte des Verfahrens nach Anspruch 11 durchzuführen.

## Claims

1. Field device for measuring a filling level, a pressure or a density of a medium in a container, the field device (301) comprising:
a processor (105);
a data memory (101) for storing data of program modules, wherein the data memory is divided into at least a first and a second memory region (102, 103) which are separated from one another;
wherein the first memory region (102) stores the data of the program modules which are required for the safe operation of the field device (301) and are therefore categorised as safety-critical;
wherein the second memory region (103) only stores the data of the program modules which are not required for the safe operation of the field device (301) and are therefore categorised as not safety-critical, and
wherein the two memory regions (102, 103) are separated in such a way that none of the data stored in the first memory (102) can be unintentionally altered because the program modules that are categorised as not safety-critical do not have access to this data,
wherein the field device is designed to store a measured value redundantly in both the first memory region (102) and the second memory region (103).

2. Field device according to claim 1,
wherein the two memory regions (102, 103) are separated in such a way that a memory management unit manages access to the data.

3. Field device according to any of the preceding claims,
wherein a real-time operating system (105) is provided that meets the safety requirements of the field device and supports the memory management unit.

4. Field device according to claim 3,
wherein the operating system allows communication between the program modules.

5. Field device according to any of the preceding claims,
wherein the first memory region (102) contains a data memory of a program module that is provided for executing a function that is selected from the group consisting of determination of measured values on the basis of sensor measurement data, derivation of additional measured values on the basis of already determined measured values, output of measured values and diagnosis.

6. Field device according to any of the preceding claims,
wherein the second memory region (103) contains a data memory of a program module that is provided for executing a function that is selected from the group consisting of establishing a connection to an external communication unit (207), recording measured values with status information regarding the time, displaying measured values and adjusting values in the field device.

7. Field device according to either claim 5 or claim 6,
wherein the field device is designed to cyclically process the determination of measured values, the derivation of measured values and the output of measured values.

8. Field device according to claim 7,
wherein the field device is designed to carry out the diagnosis in parallel with the acquisition of measured values, and has a measured value recorder which checks after each determination of a measured value if the corresponding determined measured value needs to be recorded;
wherein the measured value is stored in both the first memory region (102) and the second memory region (103).

9. Field device according to any of the preceding claims,
designed as a filling level radar, an ultrasonic filling level measuring device or a limit level measuring device.

10. Field device according to any of the preceding claims,
wherein the first memory region (102) stores the data and program modules which are required for the safe operation of the field device (301) and are therefore categorised as safety-critical;
wherein the second memory region (103) only stores the data and program modules which are not required for the safe operation of the field device (301) and are therefore categorised as not safety-critical.

11. Method for measuring and determining a filling level, a pressure or a density of a medium in a container using a field device, the method comprising the steps of:
executing program modules on a processor (105) that are required for the safe operation of the field device and are therefore categorised as safety-critical, wherein the data of the program modules are stored in a first memory region (102) of a data memory (101);
executing program modules that are not required for the safe operation of the field device and are therefore categorised as not safety-critical, wherein the data of the program modules are stored in a second memory region (103) of the data memory (101);
redundantly storing a measured value in both the first memory region (102) and the second memory region (103);
wherein the first memory region (102) is separated from the second memory region (103);
wherein the two memory regions (102, 103) are separated in such a way that none of the data stored in the first memory (102) can be unintentionally altered because the program modules that are categorised as not safety-critical do not have access to the data.

12. Method according to claim 11, further comprising the step of:
providing communication between the two memory regions (102, 103) by means of an operating system that meets the safety requirements of the field device.

13. Program element for measuring and determining a filling level, a pressure or a density of a medium in a container using a field device, which program element, when it is executed on a processor, instructs the processor to carry out the steps of the method according to claim 11.

14. Computer-readable medium, on which a program element for measuring and determining a filling level, a pressure or a density of a medium in a container is stored by a field device, which program element, when it is executed on a processor, instructs the processor to carry out the steps of the method according to claim 11.

## Revendications

1. Appareil de champ pour la mesure d'un niveau, d'une pression ou d'une masse volumique d'un fluide dans un récipient, l'appareil de champ (301) comprenant :
un processeur (105),
une mémoire de données (101) pour la mémorisation de données de modules de programme, la mémoire de données étant partagée en au moins une première et une seconde zone de mémoire (102, 103), séparées l'une de l'autre ;
la première zone de mémoire (102) mémorisant les données des modules de programme, requises pour assurer le fonctionnement sécurisé de l'appareil de champ (301) et qualifiées ainsi de critiques pour la sécurité ;
la seconde zone de mémoire (103) ne mémorisant que les données des modules de programme, non requises pour assurer le fonctionnement sécurisé de l'appareil de champ (301) et qualifiées ainsi de non critiques pour la sécurité,
la séparation des deux zones de mémoire (102, 103) étant réalisée de telle sorte qu'aucune donnée, mémorisée dans la première mémoire (102), ne peut être modifiée inopinément, car les modules de programme, qualifiés de non critiques pour la sécurité, ne peuvent y accéder,
l'appareil de champ étant réalisé pour la mémorisation redondante d'une valeur de mesure, aussi bien dans la première zone de mémoire (102) que dans la seconde zone de mémoire (103).

2. Appareil de champ selon la revendication 1,
la séparation des deux zones de mémoire (102, 103) étant réalisée de telle sorte qu'une unité de gestion de mémoire gère des accès aux données.

3. Appareil de champ selon l'une des revendications précédentes,
un système d'exploitation en temps réel (105) étant prévu, lequel système correspond aux exigences de sécurité de l'appareil de champ et assiste l'unité de gestion de mémoire.

4. Appareil de champ selon la revendication 3,
le système d'exploitation permettant une communication entre les modules de programme.

5. Appareil de champ selon l'une des revendications précédentes,
la première zone de mémoire (102) renfermant une mémoire de données d'un module de programme prévu pour l'exécution d'une fonction, sélectionnée parmi le groupe constitué de la détermination de valeurs de mesure sur la base de données de mesure de capteurs, de la déduction d'autres valeurs de mesure sur la base de valeurs déjà déterminées, de l'édition de valeurs de mesure, et du diagnostic.

6. Appareil de champ selon l'une des revendications précédentes,
la seconde zone de mémoire (103) renfermant une mémoire de données d'un module de programme prévu pour l'exécution d'une fonction, sélectionnée parmi le groupe constitué de l'établissement d'une liaison avec une unité de communication externe (207), de l'enregistrement de valeurs de mesure avec information d'état par rapport au temps, de l'affichage de valeurs de mesure et du réglage de valeurs dans l'appareil de champ.

7. Appareil de champ selon l'une des revendications 5 et 6,
l'appareil de champ étant réalisé pour la prise en charge cyclique de la détermination de valeurs de mesure, de la déduction de valeurs de mesure et de l'édition de valeurs de mesure.

8. Appareil de champ selon la revendication 7,
l'appareil de champ étant réalisé pour la mise en oeuvre du diagnostic parallèlement à la saisie des valeurs de mesure et présentant un enregistreur de valeurs de mesure qui vérifie, après chaque détermination de valeur de mesure, si la valeur correspondante déterminée doit être enregistrée ;
la valeur de mesure étant mémorisée aussi bien dans la première zone de mémoire (102) que dans la seconde zone de mémoire (103).

9. Appareil de champ selon l'une des revendications précédentes,
réalisé sous forme de radar de niveau, d'appareil de mesure de niveau à ultrasons ou d'appareil de mesure d'état limite.

10. Appareil de champ selon l'une des revendications précédentes,
la première zone de mémoire (102) mémorisant les données et modules de programme, requis pour assurer le fonctionnement sécurisé de l'appareil de champ (301) et qualifiés ainsi de critiques pour la sécurité ;
la seconde zone de mémoire (103) ne mémorisant que les données et modules de programme, non requis pour assurer le fonctionnement sécurisé de l'appareil de champ (301) et qualifiés ainsi de non critiques pour la sécurité.

11. Procédé de mesure et de détermination d'un niveau, d'une pression ou d'une masse volumique d'un fluide dans un récipient par un appareil de champ, le procédé comprenant les étapes :
exécution de modules de programme sur un processeur (105), lesquels modules sont requis pour assurer le fonctionnement sécurisé de l'appareil de champ et ainsi qualifiés de critiques pour la sécurité, les données des modules de programme étant mémorisées dans une première zone de mémoire (102) d'une mémoire de données (101) ;
exécution de modules de programme, non requis pour assurer le fonctionnement sécurisé de l'appareil de champ et ainsi qualifiés de non critiques pour la sécurité, les données des modules de programme étant mémorisées dans une seconde zone de mémoire (103) de la mémoire de données (101) ;
mémorisation redondante d'une valeur de mesure aussi bien dans la première zone de mémoire (102) que dans la seconde zone de mémoire (103) ;
la première zone de mémoire (102) étant séparée de la seconde zone de mémoire (103),
la séparation des deux zones de mémoire (102, 103) étant réalisée de telle sorte qu'aucune donnée, mémorisée dans la première mémoire (102), ne peut être modifiée inopinément, car les modules de programme, qualifiés de non critiques pour la sécurité, ne peuvent y accéder.

12. Procédé selon la revendication 11, comprenant en outre l'étape :
préparation d'une communication entre les deux zones de mémoire (102, 103) par un système d'exploitation, qui correspond aux exigences de sécurité de l'appareil de champ.

13. Elément de programme pour la mesure et la détermination d'un niveau, d'une pression ou d'une masse volumique d'un fluide dans un récipient par un appareil de champ, lequel élément, lorsqu'il est réalisé sur un processeur, donne l'ordre au processeur de mettre en oeuvre les étapes du procédé selon la revendication 11.

14. Support lisible par ordinateur, sur lequel est mémorisé un élément de programme pour la mesure et la détermination d'un niveau, d'une pression ou d'une masse volumique d'un fluide dans un récipient par un appareil de champ, lequel élément, lorsqu'il est réalisé sur un processeur, donne l'ordre à ce dernier de mettre en oeuvre les étapes du procédé selon la revendication 11.
